# EUROPÄISCHE PATENTSCHRIFT

(11) **EP 0 791 271 B1**
(45) Veröffentlichungstag und Bekanntmachung des Hinweises auf die Patenterteilung: **10.03.1999**
(21) Anmeldenummer: 95936938.0
(22) Anmeldetag: 13.11.1995
(51) Int. Cl.: H04N 7/15, H04N 1/00

(54) **VERFAHREN UND ANORDNUNG ZUM ÜBERTRAGEN VON FAKSIMILE-KODIERTER INFORMATION ZWISCHEN MULTIMEDIAFÄHIGEN KOMMUNIKATIONSENDGERÄTEN**
METHOD AND SYSTEM FOR TRANSMITTING FACSIMILE-CODED DATA BETWEEN COMMUNICATIONS TERMINALS WITH MULTIMEDIA CAPABILITY
PROCEDE ET DISPOSITIF POUR LA TRANSMISSION DE DONNEES TELECOPIEUR CODEES ENTRE DES TERMINAUX DE COMMUNICATION A CAPACITE MULTIMEDIA

(30) Priorität: 11.11.1994 DE 4440402; 13.03.1995 DE 19509022
(43) Veröffentlichungstag der Anmeldung: 27.08.1997
(73) Patentinhaber: SIEMENS AKTIENGESELLSCHAFT, 80333 München (DE)
(72) Erfinder: SEBESTYEN, Istvan, D-81476 München (DE)
(86) Internationale Anmeldenummer: DE9501564
(87) Internationale Veröffentlichungsnummer: WO9615628

(56) Entgegenhaltungen:
- WO-A-92/02100
- WO-A-92/21211
- US-A- 5 283 638
- FIFTH NORDIC SEMINAR ON DIGITAL MOBILE COMMUNICATIONS, 1. - 3.Dezember 1992 HELSINKI, FINLAND, Seiten 55-62, XP 000457835 I.DTTRICH 'THE SIEMENS D900 SOLUTION FOR FAX GROUP 3 SUPPORT IN THE INTERWORKING FUNCTION'
- FUJITSU-SCIENTIFIC AND TECHNICAL JOURNAL, Bd. 28, Nr. 2, 1.Januar 1992 Seiten 172-179, XP 000312058 RYUSAKU IMAI ET AL 'MULTIMEDIA COMMUNICATION TECHNOLOGY'
- PATENT ABSTRACTS OF JAPAN vol. 016 no. 441 (E-1264) ,14.September 1992 & JP,A,04 154251 (FUJITSU LTD) 27.Mai 1992,

## Beschreibung

Die Erfindung betrifft ein Verfahren und eine Anordnung zum Übertragen von faksimile-kodierter Information zwischen multimediafähigen Kommunikationsendgeräten, wie sie zur Übertragung von Daten-, Video- und Audio-Signalen bekannt sind und deren Übertragung unter Verwendung eines Protokolls nach ITU-T H.223 bzw. H.245 (gemeint ist die Fassung von 11/1995) durchführen.

Die über analoge Schnittstellen an ein Kommunikationsnetz anschließbaren Endgeräte der Telefax-Gruppe 3 werden hauptsächlich für die übertragung digitaler Standbilder benutzt. Die über die Telekommunikationsnetze zu übermittelnden Standbilder sind aus einer großen Anzahl winziger (Pixel genannter) schwarzer und weißer Mosaikquadrate gleicher Form und Größe zusammengesetzt. Die Ursprungsstandbilder werden entweder von einem Scanner abgetastet und in schwarze oder weiße Pixel zerlegt oder als Ergebnis einer Dokumenten-/Zeichnungserstellung von einem Computer erzeugt. Im sendenden Telefax-Endgerät werden die Pixel in Digitalcode umgewandelt. Als erstes werden sie komprimiert, um die zu übertragende Informationsmenge zu reduzieren und danach werden sie in Informationsdatenblöcke aufgeteilt und blockweise über das Telekommunikationsnetz übermittelt. Im Empfangs-Telefax-Endgerät werden die empfangenen Informationen dekomprimiert und in die ursprünglichen schwarzen und weißen Pixel dekodiert, womit ein Bild zusammengesetzt wird, das dem Original gleicht (und daher ein "Faksimile" desselben darstellt). Vom Empfangsendgerät wird das empfangene Bild gewöhnlich auf Papier ausgedruckt oder in manchen Fällen auf einem Anzeigebildschirm dargestellt oder auf örtlichen digitalen Speichereinrichtungen, wie auf einer Magnetplatte, gespeichert.

Das von Endgeräten der Telefax-Gruppe 3 verwendete Verfahren ist nach der Internationalen Fernmeldeunion (ITU - International Telecommunication Union) in den entsprechenden ITU-T Empfehlungen für Gruppe 3 (ITU-T T.4, ITU-T T.6, ITU-T T.30) (mittlerweile letzte Revision 1995) standardisiert worden.

Ein Faksimile Gruppe 3 Gerät ist in der Regel ein "monomediales" Kommunikationsgerät, das heißt, es kann normalerweise nur eine bestimmte Art von Information (nämlich ein Faksimile Pixel-Bild) übertragen.

Multimediafähige Kommunikationsendgeräte sind demgegenüber in der Lage gleichzeitig mindestens zwei Informationsarten, wie z.B. ein Faksimile Pixel-Bild begleitet mit Sprache, zu übertragen.

Aus WO-A-92/21211 ist es bekannt für Videokonferenzzwecke die Übertragung von multimedialen komprimierten Multiplexinformationen und deren Zwischenspeicherung zur Anpassung an unterschiedliche Zeitzonen durchzuführen. Ein Mobilbildtelefonprotokoll ist dort nicht angegeben. Weiterhin ist in dieser Druckschrift eine Vorrichtung angegeben, welche aus einer Kamera, einem Computer und einem Interface besteht. Diese Vorrichtung führt Audiosignalcodier und Faksimile-Funktionen unter Einbeziehung eines Modems aus. Dort findet allerdings keine Datenkompression bzw. -dekompression und Einbeziehung der CCITT-Richtlinien statt.

Aufgabe der Erfindung ist es, ein sicheres, einfach zu realisierendes Verfahren zur Faksimile-Bild-Übertragung im Rahmen der multimedialen Kommunikation über ein Kommunikationsnetz anzugeben, das unabhängig davon, ob die Kommunikationsendgeräte über analoge oder digitale Schnittstellen an das Kommunikationsnetz angeschlossen sind, die Realisierung von Zusatz-Kommunikationsdiensten ermöglicht. Darüber hinaus sind Anordnungen zur Durchführung eines solchen Verfahrens anzugeben.

Diese Aufgabe wird gelöst durch ein Halbduplex Verfahren mit den Merkmalen des Anspruches 1 oder gelöst durch ein Vollduplex Verfahren mit den Merkmalen des Anspruches 2. Günstige Ausgestaltungen sind Gegenstand von abhängigen Ansprüchen. Außerdem werden Anordnungen zur Durchführung spezieller Ausgestaltungen des erfindungsgemäßen Verfahrens in den Ansprüchen 5 und 6 angegeben.

Nachstehend wird die Erfindung näher erläutert:

Es wird vorgeschlagen, in dem zwischen Telefaxendgeräten übertragenen Informationsstrom anstelle des bekannten Halbduplex- oder Vollduplex (T.30 Annex C) Protokolls nach ITU-T T.30 ein neues Vollduplex-Protokoll gemäß "Paket Media Mode" des ITU PSTN / Mobil Bildtelefons (ITU-T H.324 bzw. ITU-T H.32P/M Serie der ITU-T Emfehlungen) anzuwenden, in dem das Faksimile-Protokoll nach ITU-T T.30 mit Sprache (z.B. nach ITU-T G.723, G.729 oder G.dsvd codiert) mit ITU-T H.223 gemultiplext wird. Die Steuerung, d.h. Öffnen, Übertragen und Schließen der Faksimile-Kanäle erfolgt mit Hilfe von einer ITU-T Multimedia-Kanal-Steuerung, gemäß ITU-T H.245.

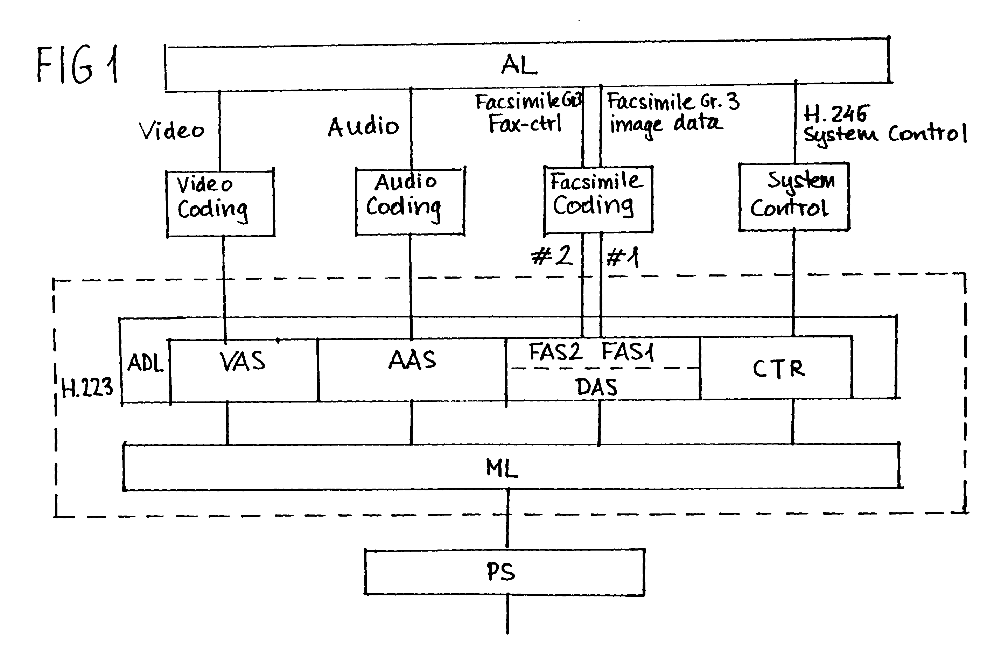

Ein erfindungsgemäßes Verfahren zum Übertragen von faksimile-kodierten Informationen von einem sendenden Kommunikationsendgerät über ein Kommunikationsnetz zu einem empfangenden Kommunikationsendgerät unter Verwendung des Faksimile-übertragungsprotokolls nach ITU-T T.4 und ITU-T T.30 und eines bezüglich der Benutzerkanäle flexiblen PSTN/Mobil-Bildtelefon-Protokolls (mittlerweile ITU-T H.223) kann bei Faksimile-Gr.3-Übertragung mit halbduplexem Faksimile Protokoll nach ITU-T T.30 folgende Verfahrensschritte haben:
1a) Eine digitale Faksimile-Eingangs-Information wird im sendenden Kommunikationsendgerät komprimiert;
1b) die (gemäß ITU-T T.4, T.6) faksimile-kodierte Information wird durch eine Faksimile-Anpassungschicht aufgeteilt und an die darunterliegende Multimedia-Paket-Multiplex-Schicht angepaßt (Fig 1). Hierfür werden mit Hilfe von ITU-T H.245 zwei Datenkanäle (Datenkanal #1, und #2) zugeordnet und eröffnet. Datenkanal #2 wird als Vollduplex-Kanal für die Übertragung der Faksimile Steuerdaten gemäß ITU-T T.30 benützt. In diesem Datenkanal werden unter anderem die Geräteparameter und die gemeinsamen Übertragungs-Parameter (z.B. Bildauflösung, Faksimile Kompressionsmethode, Fehlerkorrekturverfahren, Faksimile Senden oder -Empfangen) ausgetauscht, ausgewählt und eingestellt; die erfolgreiche / oder erfolglose Übertragung der Seite und/oder der Faksimile Übertragung bestätigt; nach Übertragung der Faksimile Nachricht die Kommunikation beendet, und die Steuerung an ITU-T H.245 zurückgegeben. Datenkanal #1 wird zum übertragen der Faksimile Codierten Daten als Halbduplex Kanal zugeordnet und eröffnet. Die Faksimile Daten werden gemäß der Einstellungen über Datenkanal #2 kodiert und gesendet.
1c) jeder Datenblock des Datenkanals #2 und #1 wird als Faksimile-Informations-Steuerblock bzw. Faksimile-Informations-Datenblock gekennzeichnet an die Multiplex-Schicht weitergereicht;
1d) alle Informationsdatenblöcke werden vom sendenden Kommunikationsendgerät unter Verwendung eines mit ITU-T H.245 angepaßten PSTN/Mobil-Bildtelefonprotokolls - gemäß ITU-T H.223 - mit Hilfe der Multiplex-Schicht mit eventuell vorhandenen anderen Informationsblöcken für Sprache, Video, Daten usw. gemultiplext, zum empfangenden Kommunikationsendgerät übertragen und in diesem demultiplext;
1e) die demultiplexten Informationsdatenblöcke werden jeweils einer dem Informationsdatentyp Video, Sprache, Daten oder Faksimile zugeordneten Anpassungsschicht zugeteilt, die Faksimile-Anpassungsschicht gibt die Faksimileinformationsblöcke zur Anwendung eines Faksimile-Dekompressionsverfahrens gemäß der ITU-T T.4, T.6, T.30 an die Datenkanäle #1 und #2 des Empfängers weiter, und die dekomprimierte Faksimile Information wird ausgegeben oder weiterverarbeitet. Die Faksimile-Anpassungsschicht kann hierbei sowie in den unten Beschriebenen Fällen auch Teil einer Daten- Anpassungsschicht sein.

2) Bei Faksimile-Gr.3-Übertragung mit dem neuen optionalen vollduplexen Faksimile Protokoll nach ITU-T T.30 Annex C können folgende Verfahrensschritte vorgesehen sein:
   2a) Eine digitale Faksimile-Eingangs-Information wird im sendenden Kommunikationsendgerät komprimiert;
   2b) die (gemäß ITU-T T.4, T.6) faksimile-kodierte Information wird durch eine Faksimile-Anpassungschicht aufgeteilt und an die darunterliegende Multimedia-Paket-Multiplex-Schicht angepaßt. Hierfür wird mit Hilfe von ITU-T H.245 nur ein Datenkanal (Datenkanal #1) zugeordnet und eröffnet.
      Datenkanal #1 wird als Vollduplex-Kanal auch für die Übertragung der Faksimile Steuerdaten gemäß ITU-T T.30 Annex C benützt. Bei der Faksimile-Steuerung werden unter anderem die Geräteparameter und die gemeinsamen Übertragungs-Parameter (z.B. Bildauflösung, Faksimile Kompressionsmethode, Faksimile Senden oder Empfangen) ausgetauscht, ausgewählt und eingestellt; die erfolgreiche / oder erfolglose Übertragung der Seite und/oder der Faksimile Übertragung wird bestätigt; nach Übertragung der Faksimile Nachricht wird die Kommunikation beendet, und die Steuerung wird an ITU-T H.245 zurückgegeben.
      Im Datenkanal #1 wird zum übertragen der Faksimile Codierten Daten der Kanal gemäß T.30 Annex C zugeordnet, eröffnet und gesendet.
   2c) jeder Datenblock des Datenkanals #1 wird als Faksimile-Informations-Datenblock gekennzeichnet an die Multiplex-Schicht weitergereicht;
   2d) alle Informationsdatenblöcke werden vom sendenden Kommunikationsendgerät unter Verwendung des PSTN/Mobil-Bildtelefonprotokolls - gemäß ITU-T H.223 und H.245 - mit Hilfe der Multiplex-Schicht mit eventuell vorhandenen anderen Informationsblöcken für Sprache, Video, Daten usw. gemultiplext, zum empfangenden Kommunikationsendgerät übertragen und in diesem demultiplext;
   2e) die demultiplexten Informationsdatenblöcke werden jeweils einer dem Informationsdatentyp Video, Sprache, Daten oder Faksimile zugeordneten Anpassungsschicht zugeteilt, die Faksimile-Anpassungsschicht gibt die Faksimileinformationsblöcke zur Anwendung eines Faksimile-Dekompressionsverfahrens gemäß der ITU-T T.4, T.6, T.30 an die Datenkanäle #1 des Empfängers weiter, und die dekomprimierte Faksimile Information wird ausgegeben oder weiterverarbeitet.

In einer günstigen Ausgestaltungsform ist zusätzlich zur Kennzeichnung für Faksimile-Informations- und Faksimile Steuerdatenblöcke außerdem eine Kennzeichnung für Audio- (Sprach-), Video-, Daten-, und Kontroll-Informationsdatenblöcke vorgesehen. Vorzugsweise wird das Faksimile-Übertragungsprotokoll nach ITU-T T.4, T.6, ITU-T T.30 und das mit ITU-T H.245 angepaßte PSTN/Mobil-Bildtelefon Protokoll nach ITU-T H.223 verwendet.

Ein Faksimilegerät zur Durchführung eines erfindungsgemäßen Verfahrens beinhaltet eine Bildabtasteinrichtung, eine Druckvorrichtung, ein Fax-Modem, eine Kommunikationssteuerung nach ITU-T T.30 und H.245, einen Multimedia-Multiplexer (H.223) und eine Faksimilekodier/Dekodiereinrichtung (ITU-T T.4, T.6, T.81, T.82) sowie eine Audio-Ein-/Ausgabeeinrichtung wie z.B. Lautsprecher und Mikrofon. Darüber hinaus ist eine Audiosignal-Kodier/Dekodiereinrichtung zum Komprimieren und Entkomprimieren von Audioein-/Ausgabesignalen vorgesehen. Gegebenenfalls kann auch ein PC oder ein Datendisplay vorhanden sein.

Nachstehend wird die Erfindung unter Bezugnahme auf die Figuren näher erläutert. Es zeigt
- Figur 1: die Protokollschichten des multimedialen Faksimile gemäß Anspruch 1;
- Figur 2: die Protokollschichten des multimedialen Faksimile gemäß Anspruch 1;
- Figur 3: in Blockdarstellung das Ausführungsbeispiel eines Faksimilegeräts zur Durchführung eines erfindungsgemäßen Verfahrens

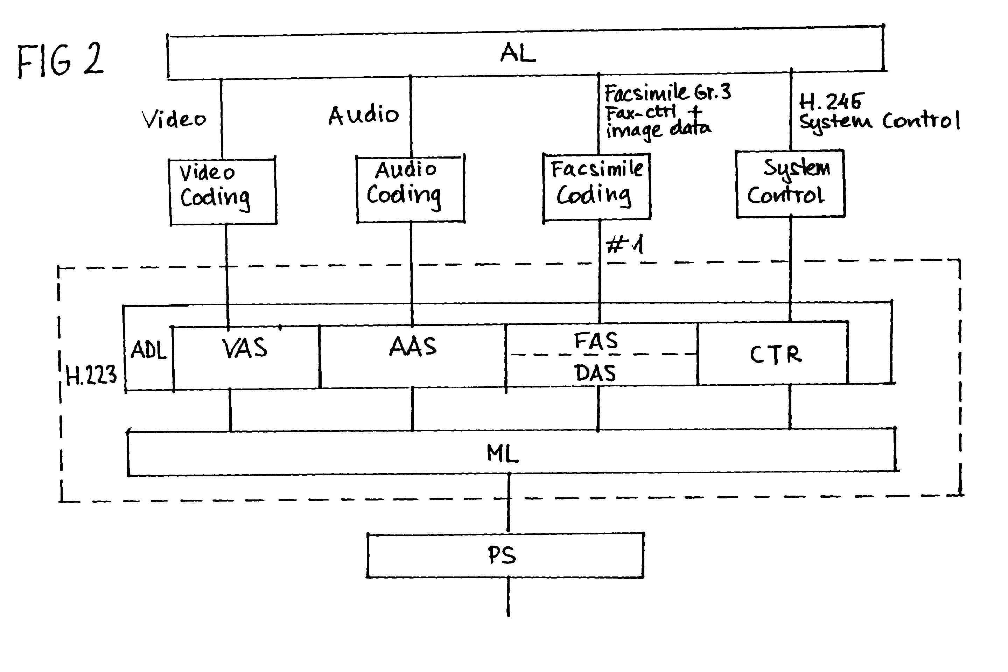

Die Erfindung macht sich, abhängig von den einzelnen Realisierungsformen, einige Besonderheiten des Telefax-Gruppe 3 Standard und der werdenden PSTN/Mobil-Bildtelefon-Standards ITU-T H.324, ITU-T H.223 und ITU-T H.245 der ITU zunutze.
Nämlich die Verwendung des einzuführenden Vollduplex-Protokolls gemäß "Packet Media Mode" des ITU PSTN/Mobil-Bildtelefons, dessen Protokollschichten den Figuren 1 oder 2 zu entnehmen sind. Dies ist ein Zwei-Schichten-Multiplex-Verfahren. Die physikalische Verbindung wird in der Physikalischen Schicht PS realisiert. Diese beinhaltet V.8, V.8bis und V.34, das zum Verbindungsaufbau und zur Modemkommunikation verwendet wird. In der unteren Schicht ML (Multimedia-Packet-Multiplex-Schicht, Multiplex Layer, Schicht 2 gem. OSI-Referenzmodell) der Multiplex-Schicht H.223 gemäß H.223 werden Informations-Pakete entsprechend den verschiedenen Informationsarten (Video, Audio/Sprache-, Daten, Faksimile-Daten, Faksimile-Steuerung, Multimedia-Terminal-Steuerung) gekennzeichnet und in unterschiedlicher Länge gemultiplext. Außerdem sorgt eine Anpassungsschicht ADL für "Faksimile Gruppe 3" (Faksimile Gr3 Adaption Layer) für die Protokoll-Anpassung der Faksimile-Kommunikation, wie z.B. den Fehlerkorrekturmodus, an die untere Multiplex-Schicht ML. Dadurch ist die Multiplex-Schicht H.223 von den Protokollen der Anwendungen (z.B. Faksimile) völlig unabhängig. In Figur 1 sind außerdem die der Multiplex-Schicht untergeordnete physikalische Schicht (Physical Layer) PS sowie an die einzelnen Typen der Anpassungsschicht ADL, nämlich die Video Adaptations Schicht (Video Adaption Layer) VAS, Daten Adaptations Schicht (Data Adaption Layer) DAS, Audio Adaptations Schicht (Audio Adaption Layer) AAS und Faksimile Adaptations Schichten (Faksimile Adaption Layers) FAS1 für Faximile-Daten und FAS2 für Faximile-Steuerung sowie anschliessende zugeordnete "Higher Layers" (höhere Schichten) für Video Codierung (Video Coding), für Daten-, für Audio-Codierung und Faksimile-Codierung/Steuerung Audio Coding und Facsimile Coding dargestellt. Letztere sind hierbei bedarfsweise als Kodier/Dekodier-Schichten ausgebildet und verbinden die Anpassungsschicht ADL (Adaption Layer) mit einer Anwendungsschicht (Application Layer) AL. Die Protokolle nach H.223 beinhalten die physikalische Schicht PS und die einzelnen Anpassungsschichten ADL. Figur 1 zeigt einen Datenkanal #1 für die Übertragung von Faksimile-Daten von der Faksimileanpassungsschicht FAS1 zur Anwendungsschicht AL und einen Datenkanal #2 für die Übertragung von Faksimile-Steuerbefehlen von der Faksimileanpassungsschicht FAS2 zur Anwendungsschicht AL. Figur 1 und 2 zeigt auch einen speziellen Datenkanal für die Übertragung von H.245 Systemsteuerung-Daten System Control von der Systemanpassungsschicht CTR zur Anwendungsschicht AL.

Die Protokollschichten des multimedialen Faksimile gemäß Figur 2 unterscheiden sich von denen gemäß Figur 1 nur in dem Punkt, daß aufgrund der Vollduplex-Übertragung zum Fax-Codec Facsimile Coding nur ein Datenkanal #1 vorgesehen ist und ebenso nur eine Faksimileanpassungsschicht FAS vorgesehen ist.

Außerdem wirkt sich auf die Erfindung günstig aus, daß die Übertragungsgeschwindigkeit der Telefax-Gruppe 3 durch optionales Hinzufügen von Hochgeschwindigkeits-Modems erhöht werden kann, beispielsweise nach ITU-T V.34 auf bis zu 33,6 kBit/s. Dies wirkt auf alle Datenkanäle aus.

Desweiteren wird die Erfindung dadurch begünstigt, daß die gegenwärtige Normierung von Sprachkodierern mit sehr niedriger Bitrate für das Bildfernsprechen im öffentlichen Telefonwählnetz in ITU-T zu geeigneten Sprachkodierern mit Übertragungsgeschwindigkeit von 5-8 kBit/s führt (ITU-T G.723, ITU-T G.729, ITU-T G.dsvd). Diese erfordern eine gesicherte Übertragungsart, beispielsweise gemäß dem "Packet Media Multiplexing"-Verfahren (ITU-T H.223).

Unter bedarfweisem Einbeziehen der vorgenannten Merkmale können die in den gegenwärtigen ITU-T-Empfehlungen beschriebenen Verfahren so erweitert werden, daß die oben beschriebene erforderliche Funktionalität, nämlich der Transport von Faksimile-Bilder über PSTN/Mobil-Bildtelefon-Protokolle, wirkungsvoll erfüllt werden kann.

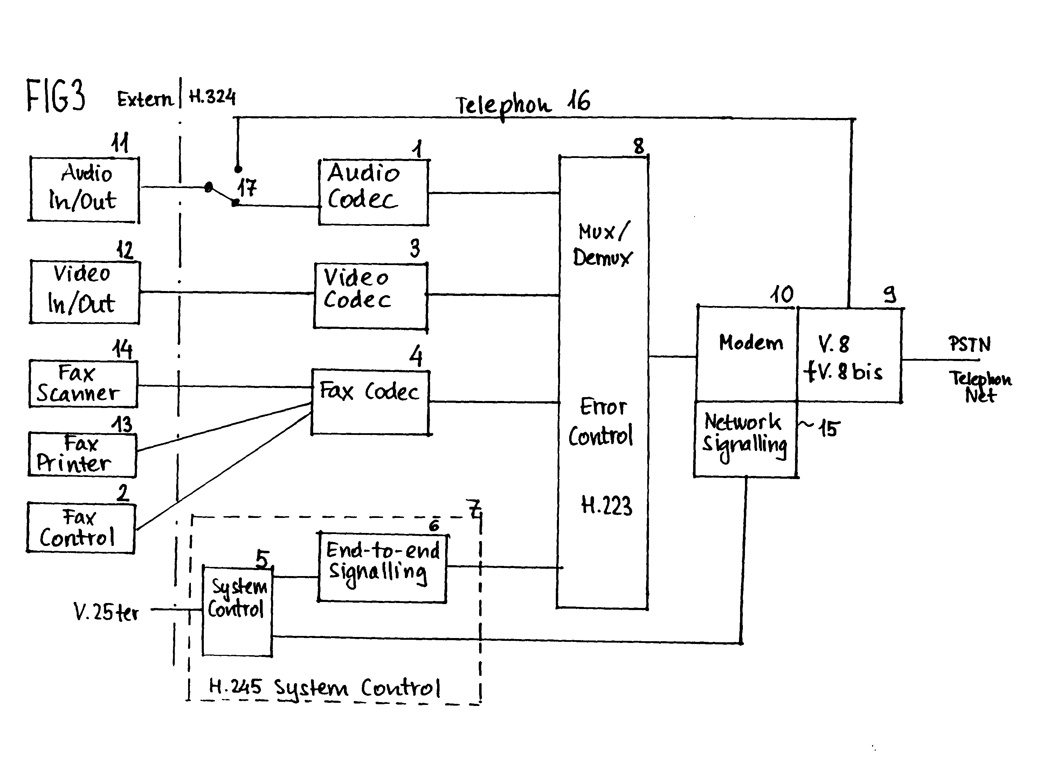

Außerdem ermöglicht die Erfindung die simultane Übertragung von multimedialer Informationen ( z.B. Sprache, Faksimile-Bild, Daten, Bewegtbild). Mit dieser Erfindung kann z.B. eine schriftliche Telefaxnachricht durch eine gesprochene Mitteilung während der Faksimileübertragung simultan kommentiert werden, die beispielsweise eine Einführung oder eine zusätzliche Erläuterung bietet oder die als gesprochener Kommentar zu den Einzelabsätzen einer empfangenen Telefaxnachricht dienen kann. Figur 3 zeigt ein Faksimilegerät, eine H.324 Multimedia-Plattform zur Durchführung eines erfindungsgemäßen Verfahrens. Dieses enthält eine Bildabtasteinrichtung Scanner 14, eine Druckvorrichtung Drucker 13, ein Modem 10, eine Kommunikationssteuerung 2 und 7 nach ITU-T T.30 und H.245, H.223, einen Multimedia-Multiplexer/Demultiplexer 8 und eine Faksimilekodier/Dekodiereinrichtung FAX-Codec 4 sowie eine Audio-Ein-/Ausgabeeinrichtung 11, wie z.B. Lautsprecher bzw. Mikrofon. Darüber hinaus ist eine Audiosignal-Kodier/Dekodiereinrichtung AUDIO-CODEC 1 (ITU-T G.723, G.729 oder G.dsvd) zum Komprimieren und Entkomprimieren von Audioein-/Ausgabesignalen vorgesehen. Figur 3 zeigt außerdem eine Netzschnittstelle, über die das Faksimile- und Multimediagerät über das Modem 10 sowie über Telefon 16 an ein Kommunikationsnetz PSTN angeschlossen ist. In dem dargestellten Ausführungsbeispiel ist außerdem eine Umschalteinrichtung 17 vorgesehen, die einen Monomedia-Audiobetrieb vereinfacht. Zudem ist eine Verbindungsaufbauschaltung 9 gezeigt.

## Patentansprüche

1. Verfahren zum Übertragen von faksimile-kodierten Informationen von einem sendenden Kommunikationsendgerät (KES) über ein Kommunikationsnetz (KN) zu einem empfangenden Kommunikationsendgerät (KEE) unter Verwendung des Faksimile-übertragungsprotokolls nach ITU-T T.4, und ITU-T T.30 und eines mit H.245 eingestellten PSTN/Mobil-Bildtelefon-Protokolls ITU-T H.223 mit folgenden Verfahrensschritten:
a) eine digitale Faksimile-Eingangs-Information wird im sendenden Kommunikationsendgerät (KES) komprimiert;
b) die komprimierte, faksimile-kodierte Information und die Faksimile-Steuer-Information wird bei einer halbduplexen Faksimile-Gr.3-Übertragung durch eine Anpassungschicht (FAS1) für Faksimile Daten (image data) und durch eine Anpassungsschicht (FAS2) und für die Faksimilesteuerung (Fax-ctrl) aufgeteilt und an die darunterliegende Multimedia-Packet-Multiplex-Schicht (ML) gemäß H.223 angepaßt;
c) jeder Faksimile-Datenblock wird als Faksimile-Informations-Datenblock oder Faksimile-Steuer-Datenblock gekennzeichnet an eine die Multimedia-Packet-Multiplex-Schicht (ML) enthaltende Multiplex-Schicht (H.223) weitergereicht;
d) alle Informationsdatenblöcke werden vom sendenden Kommunikationsendgerät (KES) unter Verwendung des genannten PSTN/Mobil-Bildtelefonprotokolls mit Hilfe der Multiplex-Schicht (H.223) mit eventuell vorhandenen anderen Informationsblöcken (AAS, VAS, DAS) für Audio, Video, Daten usw. gemultiplext, zum empfangenden Kommunikationsendgerät (KEE) übertragen und in diesem demultiplext;
e) die demultiplexten Informationsdatenblöcke werden jeweils einer dem Informationsdatentyp Video, Audio, Daten, Faksimile-Daten oder Faksimile-Steuerung zugeordneten Anpassungsschicht (VAS, AAS, DAS, FAS1, FAS2) zugeteilt, die zwei Faksimile-Anpassungsschichten (FAS1, FAS2) geben die Faksimileinformationsblöcke, bzw. Faksimile-Steuerblöcke zur Anwendung eines Faksimile-Dekompressionsverfahrens gemäß der ITU-T T.4, T.30 weiter, und die dekomprimierte Faksimile-Information wird ausgegeben oder weiterverarbeitet.

2. Verfahren zum Übertragen von faksimile-kodierten Informationen von einem sendenden Kommunikationsendgerät (KES) über ein Kommunikationsnetz (KN) zu einem empfangenden Kommunikationsendgerät (KEE) unter Verwendung des Faksimile-übertragungsprotokolls nach ITU-T T.4, und ITU-T T.30 und eines mit H.245 eingestellten PSTN/Mobil-Bildtelefon-Protokolls ITU-T H.223 mit folgenden Verfahrensschritten:
a) eine digitale Faksimile-Eingangs-Information wird im sendenden Kommunikationsendgerät (KES) komprimiert;
b) die komprimierte, faksimile-kodierte Information und die Faksimile-Steuer-Information werden bei einer Vollduplex-übertragung durch eine gemeinsame Faksimile-Anpassungschicht transportiert und an eine darunterliegende Multimedia-Packet-Multiplex-Schicht (ML) gemäß H.223 angepaß;
c) jeder Faksimile-Datenblock wird als Faksimile-Informations-Datenblock oder Faksimile-Steuer-Datenblock gekennzeichnet an eine die Multimedia-Packet-Multiplex-Schicht (ML) enthaltende Multiplex-Schicht (H.223) weitergereicht;
d) alle Informationsdatenblöcke werden vom sendenden Kommunikationsendgerät (KES) unter Verwendung des genannten PSTN/Mobil- mit Hilfe der Multiplex-Schicht (H.223) mit eventuell vorhandenen anderen Informationsblöcken für Sprache, Video, Daten usw. gemultiplext, zum empfangenden Kommunikationsendgerät (KEE) übertragen und in diesem demultiplext;
e) die demultiplexten Informationsdatenblöcke werden jeweils einer dem Informationsdatentyp Video, Audio, Daten oder Faksimile-Daten und -Steuerung zugeordneten Anpassungsschicht(VAS, AAS, FAS, DAS) zugeteilt, die Faksimile-Anpassungsschicht (FAS) gibt die Faksimileinformationsblöcke, bzw. Faksimile-Steuerblöcke zur Anwendung eines Faksimile-Dekompressionsverfahrens gemäß der ITU-T T.4, T.30 weiter, und die dekomprimierte Faksimile Information wird ausgegeben oder weiterverarbeitet.

3. Verfahren nach Anspruch 1 oder 2, dadurch **gekennzeichnet,** daß zusätzlich zur Kennzeichnung für Faksimile-Informationsdatenblöcke und Faksimile-Steuerdatenblöcke außerdem eine Kennzeichnung für Audio-, Video-, Daten-, und Multimedia-Terminal-Kontroll-Informationsdatenblöcke vorgesehen ist.

4. Verfahren nach einem der vorhergehenden Ansprüche, **gekennzeichnet durch** die Verwendung des Faksimile-Übertragungsprotokolls nach ITU-T T.4, ITU-T T.30.

5. Faksimilegerät zur Durchführung eines Verfahrens zum Übertragen von faksimile-kodierten Informationen von einem sendenden Kommunikationsendgerät (KES) über ein Kommunikationsnetz (KN) zu einem empfangenden Kommunikationsendgerät (KEE) unter Verwendung des Faksimile-Übertragungsprotokolls nach ITU-T T.4, und ITU-T T.30 und eines mit H.245 eingestellten PSTN/Mobil-Bildtelefon-Protokolls ITU-T H.223 wobei das Faksimilegerät so ausgestaltet ist, daß folgende Verfahrensschritte durchgeführt werden:
a) eine digitale Faksimile-Eingangs-Information wird im sendenden Kommunikationsendgerät (KES) komprimiert;
b) die komprimierte, faksimile-kodierte Information und die Faksimile-Steuer-Information wird bei einer halbduplexen Faksimile-Gr.3-Übertragung durch eine Anpassungschicht (FAS1) für Faksimile Daten (image data) und durch eine Anpassungsschicht (FAS2) und für die Faksimilesteuerung (Fax-ctrl) aufgeteilt und an die darunterliegende Multimedia-Packet-Multiplex-Schicht (ML) gemäß H.223 angepaßt;
c) jeder Faksimile Datenblock wird als Faksimile-Informations-Datenblock oder Faksimile-Steuer-Datenblock gekennzeichnet an eine die Multimedia-Packet-Multiplex-Schicht (ML) enthaltende Multiplex-Schicht (H.223) weitergereicht;
d) alle Informationsdatenblöcke werden vom sendenden Kommunikationsendgerät (KES) unter Verwendung des genannten PSTN/Mobil-Bildtelefonprotokolls mit Hilfe der Multiplex-Schicht (H.223) mit eventuell vorhandenen anderen Informationsblöcken (AAS, VAS, DAS) für Audio, Video, Daten usw. gemultiplext, zum empfangenden Kommunikationsendgerät (KEE) übertragen und in diesem demultiplext;
e) die demultiplexten Informationsdatenblöcke werden jeweils einer dem Informationsdatentyp Video, Audio, Daten, Faksimile-Daten oder Faksimile-Steuerung zugeordneten Anpassungsschicht (VAS, AAS, DAS, FAS1, FAS2) zugeteilt, die zwei Faksimile-Anpassungsschichten (FAS1, FAS2) geben die Faksimileinformationsblöcke, bzw. Faksimile-Steuerblöcke zur Anwendung eines Faksimile-Dekompressionsverfahrens gemäß der ITU-T T.4, T.30 weiter, und die dekomprimierte Faksimile Information wird ausgegeben oder weiterverarbeitet,
mit einer Bildabtasteinrichtung (14), einer Druckvorrichtung (13), einem Modem (10), einer Kommunikationssteuerung (7), einem Multimedia-Multiplexer (8) und einer Faksimilekodier/Dekodiereinrichtung (4) sowie einer Audio-Ein-/Ausgabeeinrichtung (11, 12) und einer Audiosignalkodier/Dekodiereinrichtung (1) zum Komprimieren und Entkomprimieren von Audioein-/Ausgabesignalen.

6. Faksimilegerät zur Durchführung eines Verfahrens zum Übertragen von faksimile-kodierten Informationen von einem sendenden Kommunikationsendgerät (KES) über ein Kommunikationsnetz (KN) zu einem empfangenden Kommunikationsendgerät (KEE) unter Verwendung des Faksimile-Übertragungsprotokolls nach ITU-T T.4, und ITU-T T.30 und eines mit H.245 eingestellten PSTN/Mobil-Bildtelefon-Protokolls ITU-T H.223 wobei das Faksimilegerät so ausgestaltet ist, daß folgende Verfahrensschritte durchgeführt werden:
a) eine digitale Faksimile-Eingangs-Information wird im sendenden Kommunikationsendgerät (KES) komprimiert;
b) die komprimierte, faksimile-kodierte Information und die Faksimile-Steuer-Information werden bei einer Vollduplex-Übertragung durch eine gemeinsame Faksimile-Anpassungschicht transportiert und an eine darunterliegende Multimedia-Packet-Multiplex-Schicht (ML) gemäß H.223 angepaß;
c) jeder Faksimile Datenblock wird als Faksimile-Informations-Datenblock oder Faksimile-Steuer-Datenblock gekennzeichnet an eine die Multimedia-Packet-Multiplex-Schicht (ML) enthaltende Multiplex-Schicht (H.223) weitergereicht;
d) alle Informationsdatenblöcke werden vom sendenden Kommunikationsendgerät (KES) unter Verwendung des genannten PSTN/Mobil- mit Hilfe der Multiplex-Schicht (H.223) mit eventuell vorhandenen anderen Informationsblöcken für Sprache, Video, Daten usw. gemultiplext, zum empfangenden Kommunikationsendgerät (KEE) übertragen und in diesem demultiplext;
e) die demultiplexten Informationsdatenblöcke werden jeweils einer dem Informationsdatentyp Video, Audio, Daten oder Faksimile-Daten und -Steuerung zugeordneten Anpassungsschicht (VAS, AAS, FAS, DAS) zugeteilt, die Faksimile-Anpassungsschicht (FAS) gibt die Faksimileinformationsblöcke, bzw. Faksimile-Steuerblöcke zur Anwendung eines Faksimile-Dekompressionsverfahrens gemäß der ITU-T T.4, T.30 weiter, und die dekomprimierte Faksimile Information wird ausgegeben oder weiterverarbeitet,
mit einer Bildabtasteinrichtung (14), einer Druckvorrichtung (13), einem Modem (10), einer Kommunikationssteuerung (7), einem Multimedia-Multiplexer (8) und einer Faksimilekodier/Dekodiereinrichtung (4) sowie einer Audio-Ein-/Ausgabeeinrichtung (11, 12),
und einer Audiosignalkodier/Dekodiereinrichtung (1) zum Komprimieren und Entkomprimieren von Audioein-/Ausgabesignalen.

## Claims

1. Method for transmitting facsimile-coded information items from a transmitting communications terminal (KES) via a communications network (KN) to a receiving communications terminal (KEE), using the facsimile transmission protocol according to ITU-T T.4, and ITU-T T.30 and a PSTN/mobile videophone protocol ITU-T H.223, set with H.245, having the following method steps:
a) a digital facsimile input information item is compressed in the transmitting communications terminal (KES);
b) the compressed, facsimile-coded information item and the facsimile control information item are divided in the event of half-duplex facsimile Gr.3 transmission by an adaptation layer (FAS1) for facsimile data (image data) and by an adaptation layer (FAS2) and for the facsimile control (Fax-ctrl) and are adapted to the multimedia packet multiplex layer (ML) situated underneath in accordance with H.223;
c) each facsimile data block is forwarded, in a manner identified as facsimile information data block or facsimile control data block, to a multiplex layer (H.223) containing the multimedia packet multiplex layer (ML);
d) all the information data blocks are multiplexed by the transmitting communications terminal (KES) using the said PSTN/mobile videophone protocol with the aid of the multiplex layer (H.223) with other information blocks (AAS, VAS, DAS), possibly present, for audio, video, data, etc., are transmitted to the receiving communications terminal (KEE) and demultiplexed therein;
e) the demultiplexed information data blocks are respectively allocated to an adaptation layer (VAS, AAS, DAS, FAS1, FAS2) assigned to the information data type video, audio, data, facsimile data or facsimile control, the two facsimile adaptation layers (FAS1, FAS2) forward the facsimile information blocks and/or facsimile control blocks for the application of a facsimile decompression method in accordance with ITU-T T.4, T.30, and the decompressed facsimile information item is output or processed further.

2. Method for transmitting facsimile-coded information items from a transmitting communications terminal (KES) via a communications network (KN) to a receiving communications terminal (KEE), using the facsimile transmission protocol according to ITU-T T.4, and ITU-T T.30 and a PSTN/mobile videophone protocol ITU-T H.223, set with H.245, having the following method steps:
a) a digital facsimile input information item is compressed in the transmitting communications terminal (KES);
b) the compressed, facsimile-coded information item and the facsimile control information item are transported through a common facsimile adaptation layer in the event of full-duplex transmission and are adapted to a multimedia packet multiplex layer (ML) situated underneath in accordance with H.223;
c) each facsimile data block is forwarded, in a manner identified as facsimile information data block or facsimile control data block, to a multiplex layer (H.223) containing the multimedia packet multiplex layer (ML);
d) all the information data blocks are multiplexed by the transmitting communications terminal (KES) using the said PSTN/mobile [lacuna] with the aid of the multiplex layer (H.223) with other information blocks possibly present, for voice, video, data, etc., are transmitted to the receiving communications terminal (KEE) and demultiplexed therein;
e) the demultiplexed information data blocks are respectively allocated to an adaptation layer (VAS, AAS, FAS, DAS) assigned to the information data type video, audio, data or facsimile data and control, the facsimile adaptation layer (FAS) forwards the facsimile information blocks and/or facsimile control blocks for the application of a facsimile decompression method in accordance with ITU-T T.4, T.30, and the decompressed facsimile information item is output or processed further.

3. Method according to Claim 1 or 2, characterized in that in addition to the identification for facsimile information data blocks and facsimile control data blocks, an identification for audio, video, data, and multimedia terminal control information data blocks is furthermore provided.

4. Method according to one of the preceding claims, characterized by the use of the facsimile transmission protocol according to ITU-T T.4, ITU-T T.30.

5. Facsimile machine for carrying out a method for transmitting facsimile-coded information items from a transmitting communications terminal (KES) via a communications network (KN) to a receiving communications terminal (KEE), using the facsimile transmission protocol according to ITU-T T.4, and ITU-T T.30 and a PSTN/mobile videophone protocol ITU-T H.223, set with H.245, the facsimile machine being configured in such a way that the following method steps are carried out:
a) a digital facsimile input information item is compressed in the transmitting communications terminal (KES);
b) the compressed, facsimile-coded information item and the facsimile control information item are divided in the event of half-duplex facsimile Gr.3 transmission by an adaptation layer (FAS1) for facsimile data (image data) and by an adaptation layer (FAS2) and for the facsimile control (Fax-ctrl) and are adapted to the multimedia packet multiplex layer (ML) situated underneath in accordance with H.223;
c) each facsimile data block is forwarded, in a manner identified as facsimile information data block or facsimile control data block, to a multiplex layer (H.223) containing the multimedia packet multiplex layer (ML);
d) all the information data blocks are multiplexed by the transmitting communications terminal (KES) using the said PSTN/mobile videophone protocol with the aid of the multiplex layer (H.223) with other information blocks (AAS, VAS, DAS), possibly present, for audio, video, data, etc., are transmitted to the receiving communications terminal (KEE) and demultiplexed therein;
e) the demultiplexed information data blocks are respectively allocated to an adaptation layer (VAS, AAS, DAS, FAS1, FAS2) assigned to the information data type video, audio, data, facsimile data or facsimile control, the two facsimile adaptation layers (FAS1, FAS2) forward the facsimile information blocks and/or facsimile control blocks for the application of a facsimile decompression method in accordance with ITU-T T.4, T.30, and the decompressed facsimile information item is output or processed further,
having an image scanner (14), a printer (13), a modem (10), a communications control (7), a multimedia multiplexer (8) and a facsimile coder/decoder (4) as well as an audio input/output device (11, 12) and an audio signal coder/decoder (1) for the compression and decompression of audio input/output signals.

6. Facsimile machine for carrying out a method for transmitting facsimile-coded information items from a transmitting communications terminal (KES) via a communications network (KN) to a receiving communications terminal (KEE), using the facsimile transmission protocol according to ITU-T T.4, and ITU-T T.30 and a PSTN/mobile videophone protocol ITU-T H.223, set with H.245, the facsimile machine being configured in such a way that the following method steps are carried out:
a) a digital facsimile input information item is compressed in the transmitting communications terminal (KES);
b) the compressed, facsimile-coded information item and the facsimile control information item are transported through a common facsimile adaptation layer in the event of full-duplex transmission and are adapted to a multimedia packet multiplex layer (ML) situated underneath in accordance with H.223;
c) each facsimile data block is forwarded, in a manner identified as facsimile information data block or facsimile control data block, to a multiplex layer (H.223) containing the multimedia packet multiplex layer (ML);
d) all the information data blocks are multiplexed by the transmitting communications terminal (KES) using the said PSTN/mobile [lacuna] with the aid of the multiplex layer (H.223) with other information blocks possibly present, for voice, video, data, etc., are transmitted to the receiving communications terminal (KEE) and demultiplexed therein;
e) the demultiplexed information data blocks are respectively allocated to an adaptation layer (VAS, AAS, FAS, DAS) assigned to the information data type video, audio, data or facsimile data and control, the facsimile adaptation layer (FAS) forwards the facsimile information blocks and/or facsimile control blocks for the application of a facsimile decompression method in accordance with ITU-T T.4, T.30, and the decompressed facsimile information item is output or processed further,
having an image scanner (14), a printer (13), a modem (10), a communications control (7), a multimedia multiplexer (8) and a facsimile coder/decoder (4) as well as an audio input/output device (11, 12), and having an audio signal coder/decoder (1) for the compression and decompression of audio input/output signals.

## Revendications

1. Procédé pour la transmission d'informations codées de télécopie d'un terminal de communication émetteur (KES) à un terminal de communication récepteur (KEE) par l'intermédiaire d'un réseau de communication (KN) en utilisant le protocole de transmission de télécopie selon ITU-T T.4 et ITU-T T.30 et un protocole de vidéophonie mobile/PSTN ITU-T H.223 complété par H.245, comportant les étapes suivantes :
a) on comprime l'information numérique d'entrée de télécopie dans le terminal de communication émetteur (KES) ;
b) on divise l'information de télécopie codée et comprimée et l'information de commande de télécopie lors d'une transmission de télécopie du groupe 3 en semi-duplex par une couche d'adaptation (FAS1) pour les données de télécopie (image data) et par une couche d'adaptation (FAS2) pour la commande de télécopie (Fax-ctrl) et on l'adapte à la couche multiplex à paquets multimédia (ML) inférieure selon H.223 ;
c) on retransmet chaque bloc de données de télécopie, caractérisé comme bloc de données d'information de télécopie ou comme bloc de données de commande de télécopie, à une couche multiplex (H.223) contenant la couche multiplex à paquets multimédia (ML) ;
d) on multiplexe tous les blocs de données d'information dans le terminal de communication émetteur (KES), en utilisant ledit protocole de vidéophonie mobile/PSTN à l'aide de la couche multiplex (H.223), avec d'autres blocs d'information (AAS, VAS, DAS) éventuellement présents pour la parole, la vidéo, les données, etc., on les transmet au terminal de communication récepteur (KEE) et on les démultiplexe dans celui-ci ;
e) on attribue les blocs de données d'information démultiplexés à chaque fois à une couche d'adaptation (VAS, AAS, DAS, FAS1, FAS2) associée au type de données d'information vidéo, audio, données, données de télécopie ou commande de télécopie, les deux couches d'adaptation de télécopie (FAS1, FAS2) retransmettent les blocs d'information de télécopie, ou les blocs de commande de télécopie, pour l'utilisation d'un procédé de décompression de télécopie selon ITU-T T.4, T.30 et on délivre en sortie ou on traite encore l'information de télécopie décomprimée.

2. Procédé pour la transmission d'informations codées de télécopie d'un terminal de communication émetteur (KES) à un terminal de communication récepteur (KEE) par l'intermédiaire d'un réseau de communication (KN) en utilisant le protocole de transmission de télécopie selon ITU-T T.4 et ITU-T T.30 et un protocole de vidéophonie mobile/PSTN ITU-T H.223 complété par H.245, comportant les étapes suivantes :
a) on comprime l'information numérique d'entrée de télécopie dans le terminal de communication émetteur (KES) ;
b) on transmet l'information de télécopie codée et comprimée et l'information de commande de télécopie lors d'une transmission en duplex intégral dans une couche d'adaptation de télécopie commune et on l'adapte à une couche multiplex à paquets multimédia (ML) inférieure selon H.223 ;
c) on retransmet chaque bloc de données de télécopie, caractérisé comme bloc de données d'information de télécopie ou comme bloc de données de commande de télécopie, à une couche multiplex (H.223) contenant la couche multiplex à paquets multimédia (ML) ;
d) on multiplexe tous les blocs de données d'information dans le terminal de communication émetteur (KES), en utilisant ledit protocole de vidéophonie mobile/PSTN à l'aide de la couche multiplex (H.223), avec d'autres blocs d'information éventuellement présents pour la parole, la vidéo, les données, etc., on les transmet au terminal de communication récepteur (KEE) et on les démultiplexe dans celui-ci ;
e) on attribue les blocs de données d'information démultiplexés à chaque fois à une couche d'adaptation (VAS, AAS, DAS, FAS) associée au type de données d'information vidéo, audio, données, données de télécopie ou commande de télécopie, la couche d'adaptation de télécopie (FAS) retransmet les blocs d'information de télécopie, ou les blocs de commande de télécopie, pour l'utilisation d'un procédé de décompression de télécopie selon ITU-T T.4, T.30 et on délivre en sortie ou on traite encore l'information de télécopie décomprimée,

3. Procédé selon la revendication 1 ou 2, caractérisé par le fait que, en plus de la caractérisation pour des blocs de données d'information de télécopie et des blocs de données de commande de télécopie, on prévoit aussi une caractérisation pour des blocs de données d'information audio, vidéo, de données et de contrôle de terminal multimédia.

4. Procédé selon l'une des revendications précédentes, caractérisé par l'utilisation du protocole de transmission de télécopie selon ITU-T T.4, ITU-T T.30.

5. Terminal de télécopie destiné à la mise en oeuvre d'un procédé pour la transmission d'informations codées de télécopie d'un terminal de communication émetteur (KES) à un terminal de communication récepteur (KEE) par l'intermédiaire d'un réseau de communication (KN) en utilisant le protocole de transmission de télécopie selon ITU-T T.4 et ITU-T T.30 et un protocole de vidéophonie mobile/PSTN ITU-T H.223 complété par H.245, le terminal de télécopie étant conçu de telle sorte que les étapes suivantes sont mises en oeuvre :
a) on comprime l'information numérique d'entrée de télécopie dans le terminal de communication émetteur (KES) ;
b) on divise l'information de télécopie codée et comprimée et l'information de commande de télécopie lors d'une transmission de télécopie du groupe 3 en semi-duplex dans une couche d'adaptation (FAS1) pour les données de télécopie (image data) et dans une couche d'adaptation (FAS2) pour la commande de télécopie (Fax-ctrl) et on l'adapte à la couche multiplex à paquets multimédia (ML) inférieure selon H.223 ;
c) on retransmet chaque bloc de données de télécopie, caractérisé comme bloc de données d'information de télécopie ou comme bloc de données de commande de télécopie, à une couche multiplex (H.223) contenant la couche multiplex à paquets multimédia (ML) ;
d) on multiplexe tous les blocs de données d'information dans le terminal de communication émetteur (KES), en utilisant ledit protocole de vidéophonie mobile/PSTN à l'aide de la couche multiplex (H.223) , avec d'autres blocs d'information (AAS, VAS, DAS) éventuellement présents pour la parole, la vidéo, les données, etc., on les transmet au terminal de communication récepteur (KEE) et on les démultiplexe dans celui-ci ;
e) on attribue les blocs de données d'information démultiplexés à chaque fois à une couche d'adaptation (VAS, AAS, DAS, FAS1, FAS2) associée au type de données d'information vidéo, audio, données, données de télécopie ou commande de télécopie, les deux couches d'adaptation de télécopie (FAS1, FAS2) retransmettent les blocs d'information de télécopie, ou les blocs de commande de télécopie, pour l'utilisation d'un procédé de décompression de télécopie selon ITU-T T.4, T.30 et on délivre en sortie ou on traite encore l'information de télécopie décomprimée, et comportant un dispositif d'analyse d'image (14), un dispositif d'impression (13), un modem (10), une commande de communication (7), un multiplexeur multimédia (8) et un dispositif codeur/décodeur de télécopie (4) ainsi qu'un dispositif d'entrée/sortie audio (11, 12) et un dispositif codeur/décodeur de signal audio (1) pour la compression et la décompression de signaux d'entrée/sortie audio.

6. Terminal de télécopie destiné à la mise en oeuvre d'un procédé pour la transmission d'informations codées de télécopie d'un terminal de communication émetteur (KES) à un terminal de communication récepteur (KEE) par l'intermédiaire d'un réseau de communication (KN) en utilisant le protocole de transmission de télécopie selon ITU-T T.4 et ITU-T T.30 et un protocole de vidéophonie mobile/PSTN ITU-T H.223 complété par H.245, le terminal de télécopie étant conçu de telle sorte que les étapes suivantes sont mises en oeuvre :
a) on comprime l'information numérique d'entrée de télécopie dans le terminal de communication émetteur (KES) ;
b) on transmet l'information de télécopie codée et comprimée et l'information de commande de télécopie lors d'une transmission en duplex intégral dans une couche d'adaptation de télécopie commune et on l'adapte à une couche multiplex à paquets multimédia (ML) inférieure selon H.223 ;
c) on retransmet chaque bloc de données de télécopie, caractérisé comme bloc de données d'information de télécopie ou comme bloc de données de commande de télécopie, à une couche multiplex (H.223) contenant la couche multiplex à paquets multimédia (ML) ;
d) on multiplexe tous les blocs de données d'information dans le terminal de communication émetteur (KES), en utilisant ledit protocole de vidéophonie mobile/PSTN à l'aide de la couche multiplex (H.223), avec d'autres blocs d'information éventuellement présents pour la parole, la vidéo, les données, etc., on les transmet au terminal de communication récepteur (KEE) et on les démultiplexe dans celui-ci ;
e) on attribue les blocs de données d'information démultiplexés à chaque fois à une couche d'adaptation (VAS, AAS, FAS, DAS) associée au type de données d'information vidéo, audio, données, données de télécopie ou commande de télécopie, la couche d'adaptation de télécopie (FAS) retransmet les blocs d'information de télécopie, ou les blocs de commande de télécopie, pour l'utilisation d'un procédé de décompression de télécopie selon ITU-T T.4, T.30 et on délivre en sortie ou on traite encore l'information de télécopie décomprimée,
et comportant un dispositif d'analyse d'image (14), un dispositif d'impression (13), un modem (10), une commande de communication (7), un multiplexeur multimédia (8) et un dispositif codeur/décodeur de télécopie (4) ainsi qu'un dispositif d'entrée/sortie audio (11, 12),
et un dispositif codeur/décodeur de signal audio (1) pour la compression et la décompression de signaux d'entrée/sortie audio.
